# EUROPEAN PATENT SPECIFICATION

(11) **EP 4 402 353 B1**
(45) Date of publication and mention of the grant of the patent: **04.03.2026**
(21) Application number: 22772546.2
(22) Date of filing: 12.09.2022
(51) Int. Cl.: F01N 3/28

(54) **FLOW DEVICE**
STRÖMUNGSVORRICHTUNG
DISPOSITIF D'ÉCOULEMENT

(30) Priority: 16.09.2021 FI 20215978
(43) Date of publication of application: 24.07.2024
(73) Proprietor: Proventia Oy, 90460 Oulunsalo (FI)
(72) Inventor: SAARI, Petri, 90460 Oulunsalo (FI); TYNI, Tuomas, 90460 Oulunsalo (FI); AMBERLA, Arno, 90460 Oulunsalo (FI); KINNUNEN, Toni, 90460 Oulunsalo (FI); KURIKKA, Jukka, 90460 Oulunsalo (FI)
(74) Representative: Espatent Oy
(86) International application number: PCT/FI2022/050610
(87) International publication number: WO 2023/041843

(56) References cited:
- EP-A1- 2 492 465
- WO-A1-2013/178321
- WO-A1-2016/118720
- WO-A1-2016/169709
- WO-A1-2018/068667
- WO-A1-2019/158269
- WO-A1-2020/009694
- WO-A1-2021/007069
- CN-A- 106 232 955
- US-A1- 2013 164 183

## Description

### TECHNICAL FIELD

The present disclosure generally relates to a flow device for exhaust gas aftertreatment.

### BACKGROUND

This section illustrates useful background information without admission of any technique described herein representative of the state of the art.

Exhaust gas after-treatment has limited room both in terms of physical space allowed and in terms of counter pressure that may be formed. Moreover, the more turbulence is formed, the better the reactant generally evaporates, but the higher the pressure drop is required. Furthermore, the since the flow rate of exhaust gas varies upon changes of motor load, some of the reactant may accrue onto structures such as a body of a reactant doser. Various flow guide structures have been used to control the flows at the stem of reactant doser. Some stem flow guides surrounding the reactant doser have holes which tend to accrue reactant residual. Furthermore, some stem protection structures concentrate on heat protection and/or heat conduction while not providing optimized flow conditions near the stem of the doser.

The exhaust gas aftertreatment is often performed using welded structures containing a mixing chamber that houses a mixer tube to an end of which reactant is injected or sprayed with the doser. Such a structure may be mechanically cleaned, albeit with some difficulty, through an end of the mixer pipe. Relevant prior art is document WO2021/007069 A1.

New alternatives are needed for guiding flows in exhaust gas aftertreatment to improve efficiency of mixing reactant into the flow and / or for avoiding harmful side effects such as accrual of reactant onto structures and even forming blockage hindering normal operation of the reactant doser. It is also desired to provide new technical alternatives.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect, there is provided a stem flow guide for an air-free reactant doser of an exhaust gas aftertreatment system; the stem flow guide comprising:
a bowl configured to extend along the reactant doser surrounding a doser axis defined by the air-free reactant doser; wherein
the bowl defines a plurality of slots at a downstream edge thereof and spaced circumferentially around the doser axis, wherein the slots are open on the edge of the stem flow guide; and in that the plurality of slots extend to a level of an end wall of the mixing chamber of the exhaust gas aftertreatment system.

Advantageously, the slots may be substantially rectangular

Advantageously, the slots at the downstream edge of the bowl may allow an exhaust gas circulation flow along the reactant doser such that accrual of reactant onto a body of the reactant doser may be avoided.

Advantageously, the slots at the downstream edge of the bowl may allow mechanical accrual removal through an opposite end of a mixing chamber.

Advantageously, the slots may be economical to manufacture.

Advantageously, the slots may be manufactured with lower tolerance than holes.

Advantageously, the slots may force less turbulence into a flow along sides of the stem flow guide so reducing some undesired backflows that could feed residuals of the reactant onto the body of the doser.

An upstream end of the bowl may be configured to block exit of exhaust gas.

An end wall of the bowl may be at least partly formed by wall of the mixing chamber.

An end wall of the bowl may be at least partly formed by a doser mount when attached for mounting the reactant doser.

The bowl may be integrally formed by the doser mount.

The doser axis may be defined by a body of the doser.

The doser axis may be defined by an output stream of the doser.

The slots may inset on average by at least 10 % or 20 % or 50 % of a circumferential distance separating adjacent slots from each other.

The slots may be inset on average by at most 20 % or 30 % or 100 % of a circumferential distance separating adjacent slots from each other.

The slots may be spaced apart by a distance that may be at least 20 % or 50 % or 100 % of an inner radius defined by a downstream end of the bowl.

At least some of the plurality of slots may exclude portions that grow narrower in a downstream direction. Advantageously, mechanical accrual removal may be facilitated by allowing direct access to all surfaces of the slots from an opposite end of the mixing chamber.

The bowl may have circumferentially a round or elliptic cross-section. Advantageously, with a round or elliptic cross-section, the bowl may allow exhaust gas to uniformly circulate the bowl and reduce formation of turbulence in the exhaust gas.

According to a second example aspect there is provided a flow device for exhaust gas aftertreatment. The flow device may comprise the stem flow guide of the first example aspect.

The flow device may further comprise any one or more of:
a mixing chamber;
a mixing tube that resides mostly in the mixing chamber and is obliquely supported to and extending through a peripheral wall of the mixing chamber; and / or
a reactant doser mount for a reactant doser to dose reactant to the mixing tube;

The mixing tube may have a peripheral exhaust gas entry configured to receive exhaust gas at reactant stream arriving from the doser, and a mixing tube output.

The flow device may have a swirl arrangement around the mixing tube, configured to form a rotating flow around the mixing tube output and to enhance exhaust gas flow through the mixing tube by forming some pressure around the mixing tube downstream from the peripheral exhaust gas entry.

The flow device may be a mixer for mixing reactant with exhaust gas.

Advantageously, by mixing tube being obliquely supported to and extending through the peripheral wall of the mixing chamber, the reactant doser mount can be made suitable for air-free reactant dosers that deliver the reactant without a gaseous carrier. Reactant dosers with pneumatic carrier are notoriously well suited for dosing at any desired point into the exhaust flow, whereas air-free reactant dosers require significantly more space at reactant output. It is particularly advantageous to use an air-free doser in application where pressurised air is not otherwise required for pneumatic breaks, for instance. Tractors, forest machines, and various other machines may particularly benefit of the flow device of the first example aspect, especially though not exclusively where power transfer is performed solely by mechanical, hydraulic, and electric transmission.

The mixing tube may comprise a first end that extends through the peripheral wall of the mixing chamber. The first end may be closed. The closing of the first end may refer to blocking entry and exit of exhaust gas, while reactant may still be dosed through the first end with a doser.

The exhaust gas may be allowed to freely flow along a portion of an outer surface of the mixing tube that resides inside the mixing chamber.

The mixing tube may comprise a vestibule defined by the closed first end and a flange spaced apart of the first end. The mixing tube may comprise a first cylindrical or conical guide attached to the first end. The mixing tube may comprise a second cylindrical or conical guide attached to the flange. The first cylindrical or conical guide may be laterally aligned with the second cylindrical or conical guide. The first cylindrical or conical guide may be spaced apart of the second cylindrical or conical guide such that a gap is formed therebetween. The first cylindrical or conical guide may comprise peripheral apertures for receiving exhaust gas from the vestibule. The second cylindrical or conical guide may be peripherally closed. The gap and the peripheral exhaust gas entry of the mixing tube may be aligned in the flow direction of the reactant.

Advantageously, the flange may direct some of the exhaust gas entering through the peripheral exhaust gas entry to form an escort flow for the output of the reactant doser. The first cylindrical or conical guide may facilitate the forming or guiding of the escort flow. The second cylindrical or conical guide may facilitate the forming or guiding of the escort flow. The second cylindrical or conical guide may facilitate the forming or guiding of the escort flow by partly obstructing flow out of the vestibule onwards along the mixing tube.

The exhaust gas entry may comprise one or more apertures in the mixing tube. The exhaust gas entry may comprise one or more apertures in the mixing tube on a side facing towards incoming exhaust gas. The one or more apertures in the mixing tube may reside peripherally in a sector of at most 180 degrees about a longitudinal axis of the mixing tube at the exhaust gas entry.

The mixing tube may comprise one or more peripheral apertures downstream from the peripheral exhaust gas entry of the mixing tube. The mixing tube may comprise one or more peripheral apertures downstream from the flange.

The mixing tube may have an angle or turn dividing the mixing tube into an entry section and an exit section. The exit section may be parallel with a longitudinal axis of the mixing chamber or at least within 5 degrees from the parallel with the longitudinal axis of the mixing chamber. A centreline length of the exit section may be at most 20 % or 30 % of that of the entry section. The centreline length may be measured along the centreline of the entry or exit section.

The entry section may have a circular cross-section. The entry section may be cylindrical. The entry section may be conical.

The exit section may have a circular cross-section. The exit section may be cylindrical. The exit section may be conical.

The swirl arrangement may be configured to at least locally bridge a gap between an inner wall of the mixing chamber and an outer wall of the mixing tube. The bridging of the gap may refer to closing at least 95 % of the distance between the inner wall of the mixing chamber and the outer wall of the mixing tube.

The swirl arrangement may comprise two or more guides extending along at least 180 degrees around the inner wall of the mixing chamber. The two or more guides may extend by at least 50; 75; 95; or 100 % in a longitudinal direction of the mixing chamber downstream to a leading edge of the peripheral exhaust gas entry.

The mixing tube may have a round cross-section. The mixing tube may have a circular cross-section. The mixing tube may have an elliptic cross-section.

The mixing chamber may have a round cross-section. The mixing chamber may have a circular cross-section. The mixing chamber may have an elliptic cross-section.

The mixing chamber may have a mixing chamber input and a mixing chamber output at opposite ends of the mixing chamber. The mixing chamber may have a longitudinal axis extending through the mixing chamber input and the mixing chamber output. The mixing chamber may have a longitudinal axis coaxially with the mixing chamber input and the output of the mixing chamber. The exit section may be coaxial with the longitudinal axis of the mixing chamber.

The exhaust gas may be configured to flow through the mixing tube free of rotation, while the exhaust gas flowing around the mixing tube is rotated at least at an exit of the mixing tube. Advantageously, shear forces may be induced into any remaining drops or droplets of reactant arriving from the mixing tube to a rotating edge flow about the end of the mixing tube. The shear forces may help evaporation of liquid reactant and/or accelerate reactions such as hydrolysis and / or thermolysis of the reactant.

The reactant doser mount may be configured to enable mounting the reactant doser in at least two different angles with relation to the longitudinal axis.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1a shows an exhaust gas after-treatment system;
Fig. 1b shows a cross-section of the system of Fig. 1a;
Figs. 2a and 2b show detailed views of a mixer of Fig. 1a;
Fig. 2c shows a section view of the mixer of Figs. 2a and 2b;
Fig. 3 shows a section view of the mixer of Figs. 2a and 2b without a doser;
Figs. 4a and 4b show an alternative mixer;
Fig. 5 shows an exhaust gas after-treatment system;
Fig. 6 schematically shows a portion of system of Fig. 1 with a turbocharger;
Fig. 7 shows a flow chart of an exhaust gas after-treatment process;
Fig. 8 shows a stem flow guide integrated with a doser mount of an example embodiment when integrated with a doser mount;
Fig. 9 shows a cross-section of the doser mount and some details in a mixing chamber of an example embodiment;
Figs. 10 and 11 shows other views of the stem flow guide of Fig. 8;
Fig. 12 shows the stem flow guide fixed to a mixing chamber; and
Fig. 13 shows the stem a detail of Fig. 12 at the stem flow guide.

### DETAILED DESCRIPTION

In the following description, like reference signs denote like elements or steps.

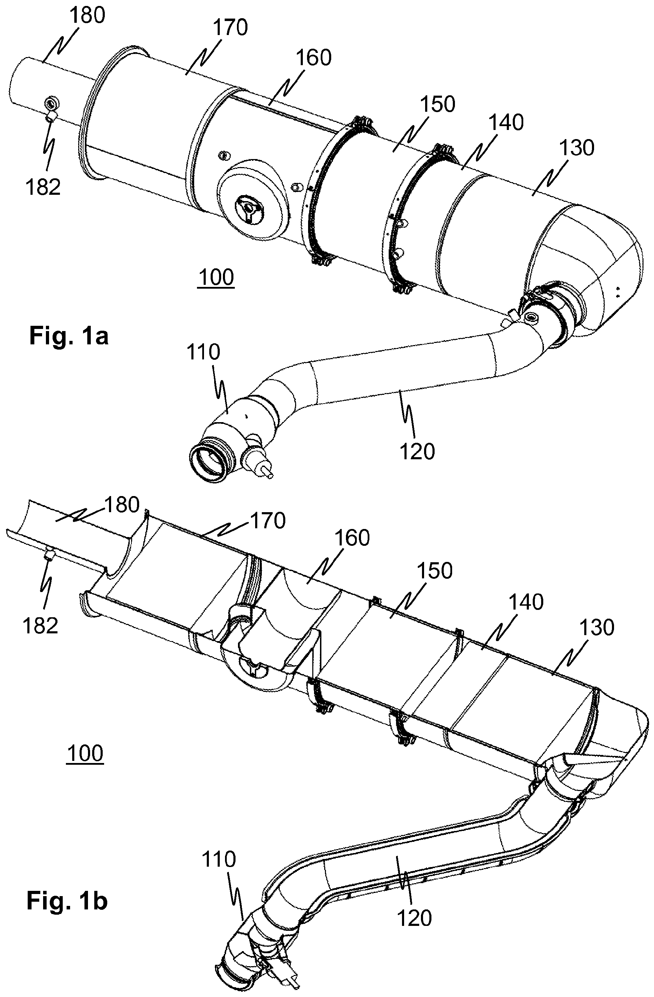

Fig. 1a shows an exhaust gas after-treatment system, comprising a first mixer 110; an intermediate connector pipe 120; a first selective catalytic reduction, SCR, catalyst 130; a diesel oxidation catalysts, DOC 140; a diesel particulate filters, DPF 150; a second mixer 160; a second SCR 170; an output pipe 180; and a sampling port 182.

Fig. 1b shows a cross-section of the system of Fig. 1a. In this embodiment, the second mixer 160 has one or more blades partly surrounding a mixing pipe of the latter reactant mixing device and forming a rotating and circulating flow about the mixing pipe. In an example embodiment, the second mixer 160 is configured to guide exhaust gas into the mixing pipe through peripheral apertures and / or an end gap of the mixing pipe. In an example embodiment, the second mixer 160 is configured to form a rotating and advancing gas flow along the mixing pipe both inside and outside the mixing pipe.

The latter reactant mixing device may be a Proventia SuperTornado^{™}. The latter reactant mixing device may be an apparatus for aftertreatment of exhaust gas comprising an inline housing as disclosed in US 10,486,117 B2.

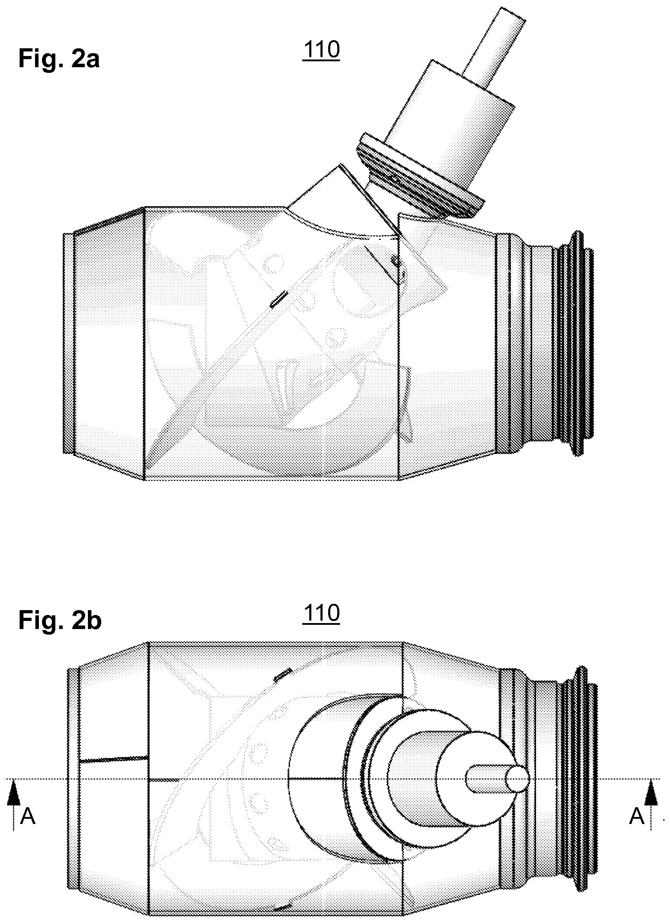

Figs. 2a and 2b show detailed views of the mixer 110 of Fig. 1a.

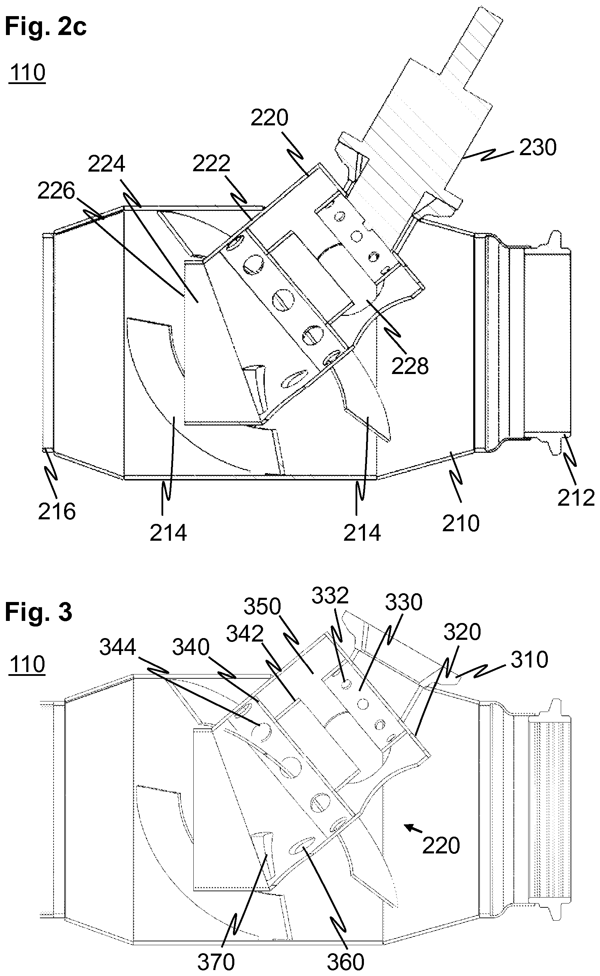

Fig. 2c shows a section view of the mixer 110 of Figs. 2a and 2b (sectioned along line A-A of Fig. 2b). Fig. 2c illustrates a mixing chamber 210 that comprises a mixing chamber input 212; swirl flow guides 214; and a mixing chamber output 216. The mixer 110 further comprises a mixing tube 220 and a doser 230. The mixing tube 220 comprises an entry section 222; an exit section 224; and a mixing tube output 226. The swirl flow guides 214 contribute to forming, collectively with other parts such as inner walls of the mixing chamber and external walls of the mixing tube 220, a swirl arrangement. The swirl arrangement produces a swirl about at least the mixing tube output 226.

Fig. 3 shows a section view of the mixer 110 of Figs. 2a and 2b without a doser. Fig. 3 further illustrates a reactant doser mount 310 for mounting the doser 230. The mixing tube 220 has a first end 320 that closes the mixing tube 220 around the doser

310. Inside the mixing tube 220, there is a first cylindrical or conical guide 330, i.e., a stem flow guide, connected to the first end 320. A flange 340 positioned in the entry section defines a vestibule 350. A second cylindrical or conical guide 242 is attached to the flange, for directing exhaust gas from the vestibule 350 forward along the first section 222 of the mixing tube 220. In Fig. 3, the first cylindrical or conical guide is laterally aligned with the second cylindrical or conical guide 342. The first cylindrical or conical guide 330 is drawn spaced apart of the second cylindrical or conical guide 342 such that a gap is formed therebetween. While in another example embodiment the first cylindrical or conical guide is closed, the one in Fig. 3 has peripheral apertures 332, such as holes or slots, for receiving exhaust gas from the vestibule. Likewise, or alternatively, the second cylindrical or conical guide 342 may be peripherally closed as in Fig. 3. Alternatively, there may be some apertures in the second cylindrical or conical guide 342, such as holes or slots.

Further down the first section and / or in the second section, there may be further apertures. Fig. 3 shows a plurality of peripheral apertures 340 downstream after the vestibule 350 and a further aperture 360. An entry opening with integral guide may also be formed as shown with reference sign 370. The integral guide may guide exhaust gas into the mixing tube and / or contribute into forming a swirl about the mixing tube output 226.

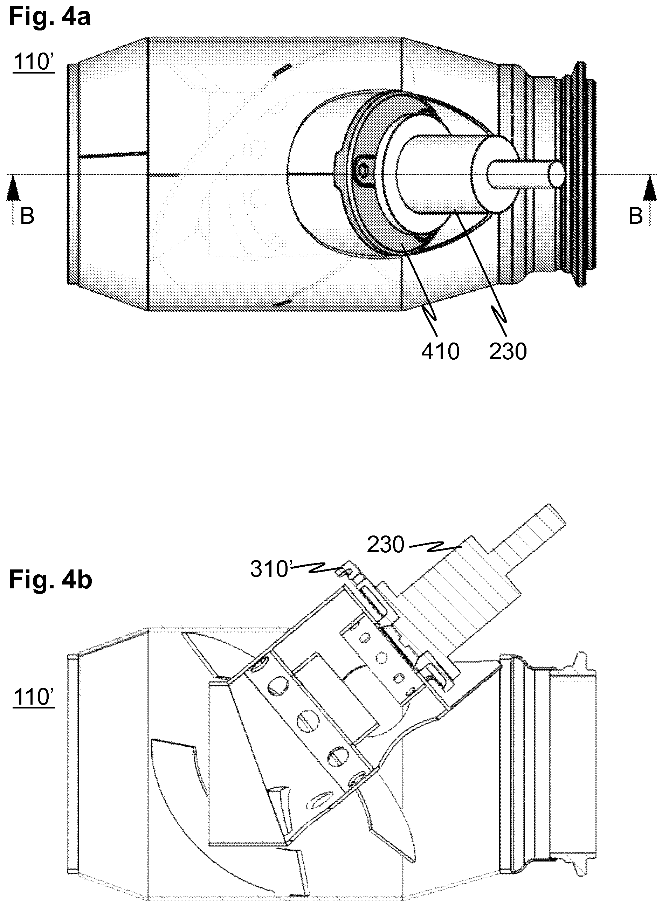

Figs. 4a and 4b show a mixer of an alternative example embodiment. In this embodiment, the doser 230 is mounted at a different angle. This is implemented by a different reactant doser mount 310' that is not obliquely connected to the first end of the mixing tube. Additionally, here the doser mount 310' is directly connected to the first end without a mounting pipe part.

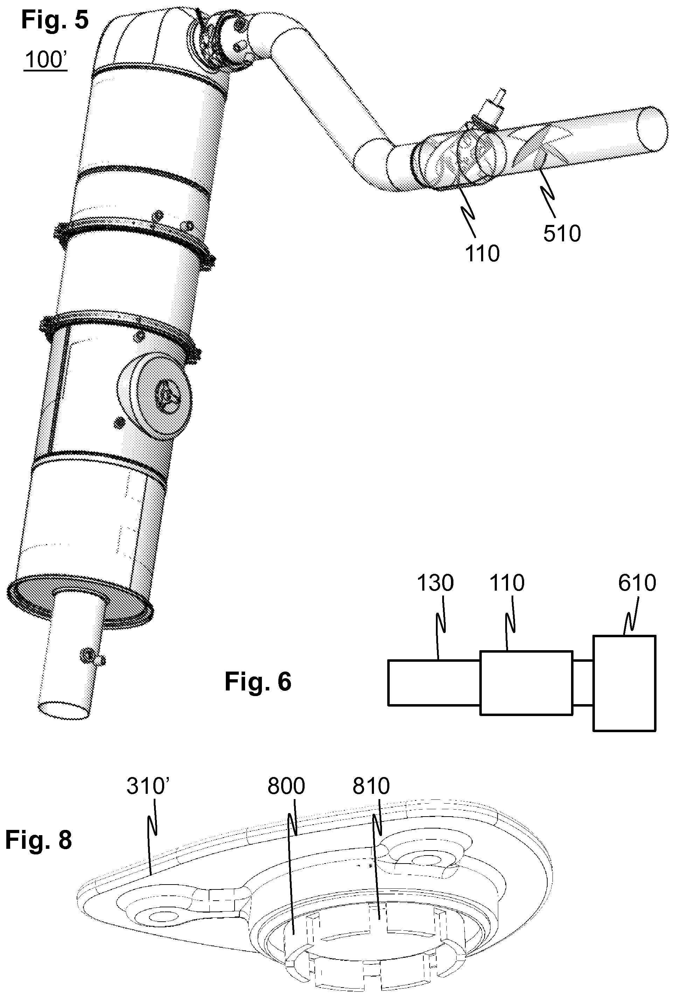

Fig. 5 shows an exhaust gas after-treatment system 100'. This system differs from that of Fig. 1 in that there is a pre-swirl arrangement 510 configured to form a swirly upstream from the mixer 110. The system of Fig. 1 is convenient, for example, when mounted downstream a turbocharger such that residual swirl resides in the exhaust gas entering the mixing chamber of the mixer 110.

Fig. 6 schematically shows a portion of system of Fig. 1 with a turbocharger 610. Here, the system has a turbocharger connector, such as the mixing chamber input 212, for receiving exhaust gas from the turbocharger 610 and for transferring the received exhaust gas to the mixer 110 so that the exhaust gas arrives to the mixing chamber with a residual swirl from the turbocharger.

Fig. 8 shows a stem flow guide 800 integrated with a doser mount 310' of an example embodiment when integrated with a doser mount. This stem flow guide 800 differs from that shown in Fig. 3 by having slots 810 instead of holes 332.

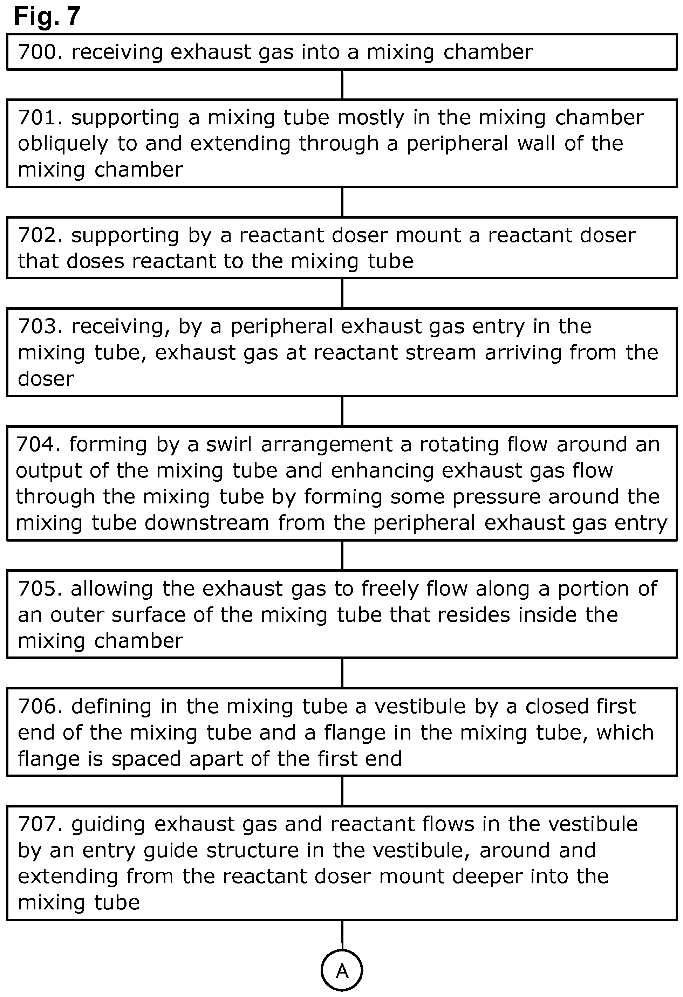

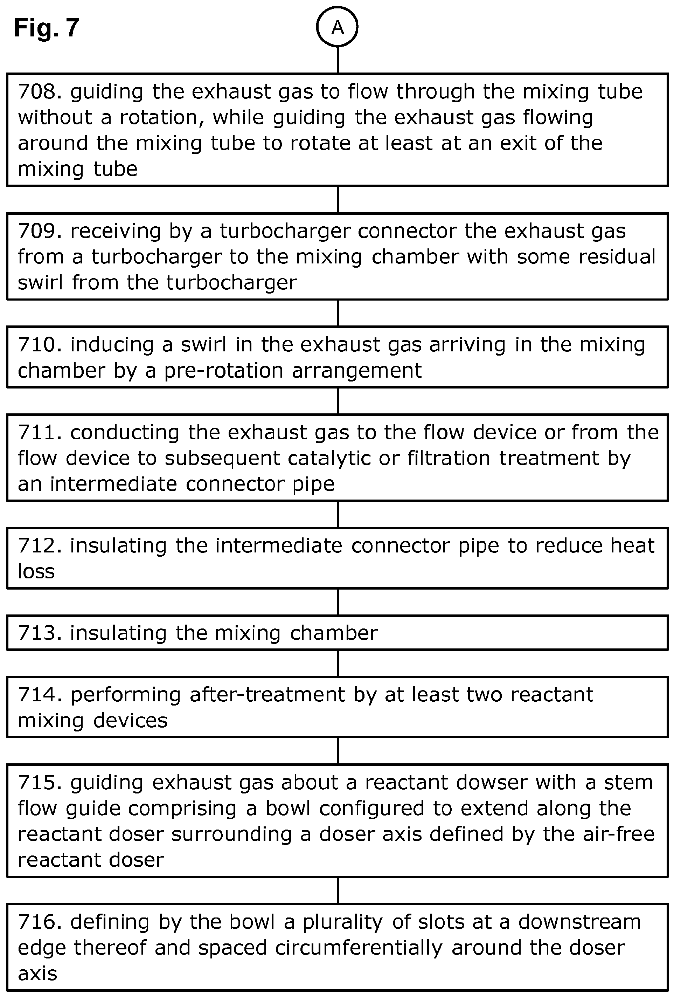

Fig. 7 shows a flow chart of an exhaust gas after-treatment process. Fig. 7 illustrates a method of guiding a flow of exhaust gas for aftertreatment comprising various possible steps including some optional steps while also further steps can be included and/or some of the steps can be performed more than once:
- 700.: receiving exhaust gas into a mixing chamber;
- 701.: supporting a mixing tube mostly in the mixing chamber obliquely to and extending through a peripheral wall of the mixing chamber;
- 702.: supporting by a reactant doser mount a reactant doser that doses reactant to the mixing tube;
- 703.: receiving, by a peripheral exhaust gas entry in the mixing tube, exhaust gas at reactant stream arriving from the doser;
- 704.: forming by a swirl arrangement, a rotating flow around an output of the mixing tube and enhancing exhaust gas flow through the mixing tube by forming some pressure around the mixing tube downstream from the peripheral exhaust gas entry;
- 705.: allowing the exhaust gas to freely flow along a portion of an outer surface of the mixing tube that resides inside the mixing chamber;
- 706.: defining in the mixing tube a vestibule by a closed first end of the mixing tube and a flange in the mixing tube, which flange is spaced apart of the first end;
- 707.: guiding exhaust gas and reactant flows in the vestibule by an entry guide structure in the vestibule, around and extending from the reactant doser mount deeper into the mixing tube;
- 708.: guiding the exhaust gas to flow through the mixing tube without a rotation, while guiding the exhaust gas flowing around the mixing tube to rotate at least at an exit of the mixing tube;
- 709.: receiving by a turbocharger connector the exhaust gas from a turbocharger to the mixing chamber with some residual swirl from the turbocharger;
- 710.: inducing a swirl in the exhaust gas arriving in the mixing chamber by a pre-rotation arrangement;
- 711.: conducting the exhaust gas to the flow device or from the flow device to subsequent catalytic or filtration treatment by an intermediate connector pipe;
- 712.: insulating the intermediate connector pipe to reduce heat loss;
- 713.: insulating the mixing chamber;
- 714.: performing after-treatment by at least two reactant mixing devices;
- 715.: guiding exhaust gas about a reactant dowser with a stem flow guide comprising a bowl configured to extend along the reactant doser surrounding a doser axis defined by the air-free reactant doser; and / or
- 716.: defining by the bowl a plurality of slots at a downstream edge thereof and spaced circumferentially around the doser axis.

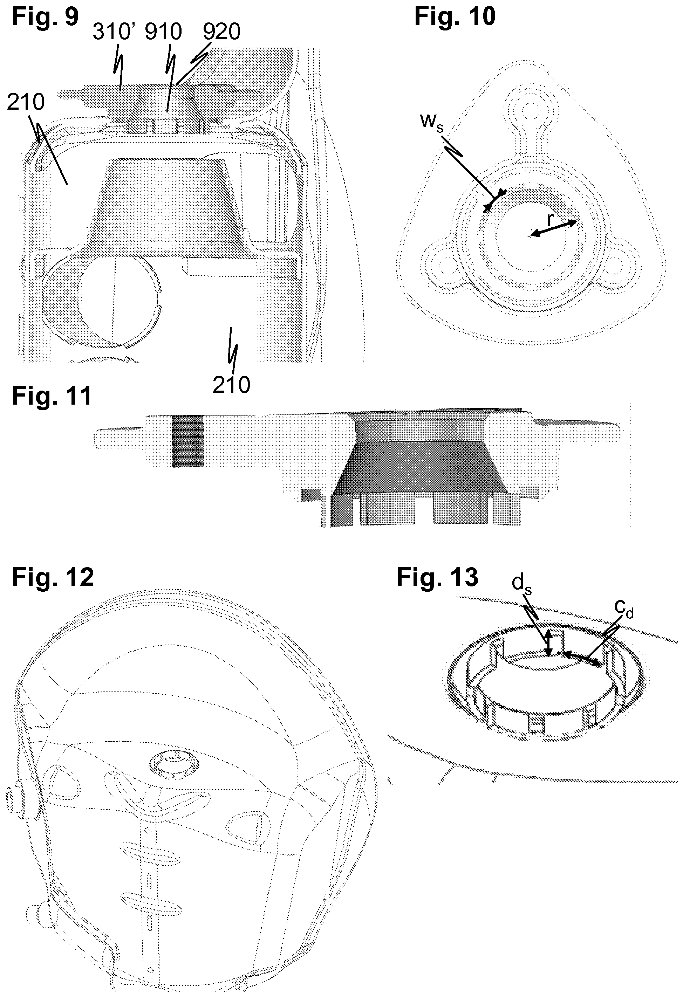

Fig. 9 shows a cross-section of the doser mount 310' of Fig. 8 and some details in a mixing chamber of an example embodiment.

Figs. 10 and 11 shows other views of the stem flow guide of Fig. 8 integrated with the doser mount.

Fig. 12 shows the stem flow guide fixed to a mixing chamber.

Fig. 13 shows the stem a detail of Fig. 12 at the stem flow guide.

As seen in Figs. 8 to 13, an upstream end of the bowl 910 may block exit of exhaust gas or close the mixing chamber about the reactant doser. In an embodiment, an end wall 920 of the bowl 910 is at least partly formed by wall of a mixing chamber, whereas as shown by Fig. 10, the end wall 920 of the bowl 910 may be at least partly formed by the doser mount 310' when attached for mounting the reactant doser (230 in Fig. 2c).

Figs. 8 to 13 also show the bowl 910 integrally formed by the doser mount 310'. In an example embodiment, the doser axis may be defined by a body of the doser. That is, the reactant may be sprayed or injected such generally to a given direction herein referred to as a doser axis. That doser axis need not be inline with a body of the doser.

Figs. 13 in particular shows how the plurality of slots 810 may extend to a level of an end wall 920 of the mixing chamber.

In an example embodiment, the bowl 910 has circumferentially a round or elliptic cross-section. Advantageously, with a round or elliptic cross-section, the bowl 910 may allow exhaust gas to uniformly circulate the bowl 910 and reduce formation of turbulence in the exhaust gas.

As shown in Figs. 8 to 13, the stem flow guide comprises slots, that is substantially rectangular inclinations or depressions, at the downstream edge thereof instead of having an unbroken or smooth downstream edge. In an embodiment, the slotted portion of the stem flow guide is formed integrally with the bowl 910, that is the downstream edge of the bowl 910 comprises wall portions parallel to the central axis of the bowl 910, said wall portions being machined to comprise the substantially rectangular slots. The slots are easier and cheaper to machine into the edge of the stem flow guide than for example holes or sawtooth-like indentations. Furthermore, as the slots are open on the edge of the stem flow guide, and / or the slots have a substantially constant width throughout their length, there is less accrual of reactant deposits in them and / or on the doser 230. Removal of any accrual is also significantly easier from the slots compared with for example holes.

The exhaust gas entering the mixing chamber 210 is in an embodiment guided to form an advancing flow in the mixing tube 220 and a swirling flow rotating around the mixing tube 220 at least at the downstream end thereof. The exhaust gas flow entering the mixing chamber also forms eddies, or eddy flows, at the area of the reactant doser mount, i.e. around the reactant doser 230 and/or between the stem flow guide 910 and the mixing tube 920. Such eddies, or eddy flows, affect the spray of reactant leaving the reactant doser 230, i.e. the droplets of the spray are in some cases pushed back towards the doser mount 310' and might accrue as deposit on or around the doser mount or the doser 230.

The output, i.e. the spray of droplets, of the reactant doser 230 is in an embodiment not continuous, but rather the output is pulsed. That is, the reactant is sprayed with a constant pressure as short pulses, the duration and interval of which is chosen according to the required dosing. During the interval between the pulses of spraying, as the spray stops, a temporary vacuum or under-pressure might form at the doser 230 if no make-up gas is available at the doser 230. Forming of such a temporary vacuum or under-pressure might in addition to the eddies, push the droplets back towards the doser mount and result in accrual of a reactant deposit onto the doser 230 and / or surfaces around the doser 230. This phenomenon might be amplified by the length of the stem flow guide 910.

The stem flow guide 910 protects the doser 230 from the eddies pushing the droplets back upstream. However, the flow around the doser mount should not be completely blocked. The slots provided at the downstream edge of the stem flow guide 910 are configured to suppress the eddies caused by the exhaust gas flow in the mixing chamber. The slots may further provide for a flushing flow inside the stem flow guide thus decreasing or preventing the formation of vacuum between the reactant pulses while not preventing the droplets from exiting the stem flow guide during spraying. Accordingly, the droplets of reactant are not pushed back towards the doser 230, and accrual of reactant deposits is decreased or prevented.

In an embodiment, the stem flow guide 910 with the slots at the downstream edge thereof affects the exhaust gas flow in co-operation with the mixing tube 220. In an embodiment, the geometry of the stem flow guide 910 and the mixing tube 220 and the distance between them is chosen in such a way that stem flow guide is inside an imagined continuation of the walls of the mixing tube, as seen in Fig. 9. In a further embodiment, the mixing tube 220 is inside an imagined continuation of the walls of the conical portion of the stem flow guide 910. In a still further embodiment, the diameter of the downstream edge of the stem flow guide 910 is smaller than the diameter of the upstream edge of the mixing tube 220.

As seen particularly in Figs. 11 and 13, the slots 810 may inset on average by a depth dₛ that is, for example, at least 10 % or 20 % or 50 % of a circumferential distance c_{d} separating adjacent slots 810 from each other, and / or the slots 810 may be inset by the depth dₛ on average by at most 20 % or 30 % or 100 % of the circumferential distance c_{d} separating adjacent slots 810 from each other. In an embodiment, the number of slots is eight, in a still further embodiment the number of slots is 6 to 10.

As seen particularly in Fig. 10, the slots 810 may be spaced apart by a distance wₛ that may be at least 20 % or 50 % or 100 % of an inner radius r defined by a downstream end of the bowl 910.

Preferably, at least some of the plurality of slots 810 exclude portions that grow narrower in a downstream direction, i.e. the width of the slot remains substantially same for its whole depth. Advantageously, mechanical accrual removal may be facilitated by allowing direct access to all surfaces of the slots 810 from an opposite end of the mixing chamber. Various embodiments have been presented. It should be appreciated that in this document, words comprise; include; and contain are each used as open-ended expressions with no intended exclusivity.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A stem flow guide for an air-free reactant doser (230) of an exhaust gas aftertreatment system; the stem flow guide comprising:
a bowl (910) configured to extend along the reactant doser (230) surrounding a doser axis defined by the air-free reactant doser; **characterized in that**
the bowl (910) defines a plurality of slots (810) at a downstream edge thereof and spaced circumferentially around the doser axis, wherein the slots (810) are open on the edge of the stem flow guide; and **in that** the plurality of slots (810) extend to a level of an end wall (920) of the mixing chamber (210) of the exhaust gas aftertreatment system (230).

2. The stem flow guide of claim 1, wherein the slots are substantially rectangular.

3. The stem flow guide of claim 1 or 2, wherein an upstream end of the bowl (910) is configured to block exit of exhaust gas.

4. The stem flow guide of claim of any one of preceding claims, wherein an end wall (920) of the bowl (910) is at least partly formed by wall of the mixing chamber (210).

5. The stem flow guide of any one of claims 1, 2 or 3, wherein an end wall (920) of the bowl (910) is at least partly formed by a doser mount (310') when attached for mounting the reactant doser.

6. The stem flow guide of any one of preceding claims, wherein the bowl (910) is integrally formed by the doser mount (310').

7. The stem flow guide of any one of preceding claims, wherein the doser axis is defined by a body of the doser (230).

8. The stem flow guide of any one of claims 1 to 4, wherein the doser axis is defined by an output stream of the doser (230).

9. The stem flow guide of any of preceding claims, wherein the slots (810) are inset on average by at least 10 % or 20 % or 50 % of a circumferential distance (wₛ) separating adjacent slots (810) from each other, and wherein the slots (810) are inset on average by at most 20 % or 30 % or 100 % of a circumferential distance separating (wₛ) adjacent slots (810) from each other.

10. The stem flow guide of any of preceding claims, wherein the slots (810) are spaced apart by a distance (wₛ) that is at least 20 % or 50 % or 100 % of an inner radius (r) defined by a downstream end of the bowl (910).

11. The stem flow guide of any one of preceding claims, wherein the width of the slots remains substantially same for their whole depth.

12. The stem flow guide of any one of preceding claims, wherein the bowl (910) has circumferentially a round or elliptic cross-section.

13. A flow device for exhaust gas aftertreatment, wherein
the flow device comprises the stem flow guide of any one of preceding claims;
the exhaust gas aftertreatment system comprises a mixing tube (220); and
the mixing tube (220) resides mostly in the mixing chamber (210) and is obliquely supported to and extending through a peripheral wall of the mixing chamber (210).

14. The flow device of claim 13, wherein the mixing tube (220) has a peripheral exhaust gas entry (228) configured to receive exhaust gas at a reactant stream arriving from the doser (230), and a mixing tube output (226).

15. The flow device of claim 13 or 14, wherein the mixing chamber (210) has a swirl arrangement around the mixing tube (220), configured to form a rotating flow around the mixing tube output (226) and to enhance exhaust gas flow through the mixing tube (220) by forming some pressure around the mixing tube (220) downstream from the peripheral exhaust gas entry (228).

## Patentansprüche

1. Sockelstromführung für einen luftfreien Reaktantdosierer (230) eines Abgasnachbehandlungssystems; wobei die Sockelstromführung umfasst:
einen Napf (910), der so ausgelegt ist, dass er sich entlang des Reaktantdosierers (230) erstreckt und eine durch den luftfreien Reaktantdosierer definierte Dosiererachse umgibt; **gekennzeichnet dadurch, dass**
der Napf (910) an seiner abströmseitigen Kante mehrere Schlitze (810) definiert, die in Umfangsrichtung um die Dosiererachse herum beabstandet sind, wobei die Schlitze (810) an der Kante der Sockelstromführung offen sind; und dadurch, dass die mehreren Schlitze (810) sich bis zu einem Niveau einer Endwand (920) der Mischkammer (210) des Abgasnachbehandlungssystems (230) erstrecken.

2. Sockelstromführung nach Anspruch 1, wobei die Schlitze im Wesentlichen rechteckig sind.

3. Sockelstromführung nach Anspruch 1 oder 2, wobei ein anströmseitiges Ende des Napfes (910) dazu ausgelegt ist, das Austreten von Abgas zu verhindern.

4. Sockelstromführung nach einem der vorhergehenden Ansprüche, wobei eine Endwand (920) des Napfes (910) mindestens teilweise durch die Wand der Mischkammer (210) ausgebildet ist.

5. Sockelstromführung nach Anspruch 1, 2 oder 3, wobei eine Endwand (920) des Napfes (910) mindestens teilweise durch eine Dosiererhalterung (310') ausgebildet ist, wenn diese zur Montage des Reaktantdosierers angebracht ist.

6. Sockelstromführung nach einem der vorhergehenden Ansprüche, wobei der Napf (910) durch die Dosiererhalterung (310') integral ausgebildet ist.

7. Sockelstromführung nach einem der vorhergehenden Ansprüche, wobei die Dosiererachse durch einen Körper des Dosierers (230) definiert ist.

8. Sockelstromführung nach einem der Ansprüche 1 bis 4, wobei die Dosiererachse durch einen Ausgangsstrom des Dosierers (230) definiert ist.

9. Sockelstromführung nach einem der vorhergehenden Ansprüche, wobei die Schlitze (810) durchschnittlich um mindestens 10 % oder 20 % oder 50 % eines Umfangsabstands (wₛ), der benachbarte Schlitze (810) voneinander trennt, eingelassen sind, und wobei die Schlitze (810) durchschnittlich um höchstens 20 % oder 30 % oder 100 % eines Umfangsabstands (wₛ), der benachbarte Schlitze (810) voneinander trennt, eingelassen sind.

10. Sockelstromführung nach einem der vorhergehenden Ansprüche, wobei die Schlitze (810) um einen Abstand (wₛ) zueinander beabstandet sind, der mindestens 20 % oder 50 % oder 100 % eines Innenradius (r) beträgt, der durch ein abströmseitiges Ende des Napfes (910) definiert ist.

11. Sockelstromführung nach einem der vorhergehenden Ansprüche, wobei die Breite der Schlitze über ihre gesamte Tiefe im Wesentlichen gleich bleibt.

12. Sockelstromführung nach einem der vorhergehenden Ansprüche, wobei der Napf (910) in Umfangsrichtung einen runden oder elliptischen Querschnitt aufweist.

13. Strömungsvorrichtung für die Abgasnachbehandlung, wobei
die Strömungsvorrichtung die Sockelstromführung nach einem der vorhergehenden Ansprüche umfasst;
das Abgasnachbehandlungssystem ein Mischrohr (220) umfasst; und
das Mischrohr (220) größtenteils in der Mischkammer (210) sitzt und schräg an einer Umfangswand der Mischkammer (210) gelagert ist und sich durch diese hindurch erstreckt.

14. Strömungsvorrichtung nach Anspruch 13, wobei das Mischrohr (220) einen peripheren Abgaseingang (228), der zur Aufnahme von Abgas an einem vom Dosierer (230) kommenden Reaktantstrom ausgelegt ist, und einen Mischrohrausgang (226) aufweist.

15. Strömungsvorrichtung nach Anspruch 13 oder 14, wobei die Mischkammer (210) rund um das Mischrohr (220) eine Verwirbelungsanordnung aufweist, die dazu ausgelegt ist, einen rotierenden Strom um den Mischrohrausgang (226) auszubilden und den durch das Mischrohr (220) fließenden Abgasstrom zu verbessern, indem rund um das Mischrohr (220) abströmseitig zum peripheren Abgaseingang (228) ein gewisser Druck ausgebildet wird.

## Revendications

1. Guide d'écoulement d'embase pour un doseur de réactif sans air (230) d'un système de retraitement des gaz d'échappement; le guide d'écoulement d'embase comprenant :
un pot (910) configuré pour s'étendre le long du doseur de réactif (230) en entourant un axe de doseur défini par le doseur de réactif sans air; **caractérisé en ce que**
le pot (910) définit une pluralité d'encoches (810) sur son bord aval et espacées dans le sens circonférentiel autour de l'axe de doseur, lesdites encoches (810) étant ouvertes sur le bord du guide d'écoulement d'embase; et **en ce que** la pluralité d'encoches (810) s'étend jusqu'à un niveau d'une paroi terminale (920) de la chambre de mélange (210) du système de retraitement des gaz d'échappement (230).

2. Guide d'écoulement d'embase selon la revendication 1, dans lequel les encoches sont essentiellement rectangulaires.

3. Guide d'écoulement d'embase selon la revendication 1 ou 2, dans lequel une extrémité amont du pot (910) est configurée pour bloquer une fuite de gaz d'échappement.

4. Guide d'écoulement d'embase selon l'une des revendications précédentes, dans lequel une paroi terminale (920) du pot (910) est formée au moins partiellement par une paroi de la chambre de mélange (210).

5. Guide d'écoulement d'embase selon la revendication 1, 2 ou 3, dans lequel une paroi terminale (920) du pot (910) est formée au moins partiellement par un support de doseur (310') lorsqu'il est en place pour monter le doseur de réactif.

6. Guide d'écoulement d'embase selon l'une des revendications précédentes, dans lequel le pot (910) est formé intégralement par le support de doseur (310').

7. Guide d'écoulement d'embase selon l'une des revendications précédentes, dans lequel l'axe de doseur est défini par un corps du doseur (230).

8. Guide d'écoulement d'embase selon l'une des revendications 1 à 4, dans lequel l'axe de doseur est défini par un flux de sortie du doseur (230).

9. Guide d'écoulement d'embase selon l'une des revendications précédentes, dans lequel les encoches (810) sont insérées en moyenne d'au moins 10 % ou 20 % ou 50 % d'un espacement circonférentiel (wₛ) séparant les encoches adjacentes (810) les unes des autres, et dans lequel les encoches (810) sont insérées en moyenne d'au plus 20 % ou 30 % ou 100 % d'un espacement circonférentiel (wₛ) séparant les encoches adjacentes (810) les unes des autres.

10. Guide d'écoulement d'embase selon l'une des revendications précédentes, dans lequel les encoches (810) sont espacées entre elles par une distance (wₛ) qui est d'au moins 20 % ou 50 % ou 100 % d'un rayon intérieur (r) défini par une extrémité avale du pot (910).

11. Guide d'écoulement d'embase selon l'une des revendications précédentes, dans lequel la largeur des encoches reste essentiellement la même sur toute leur profondeur.

12. Guide d'écoulement d'embase selon l'une des revendications précédentes, dans lequel le pot (910) présente une section transversale circulaire ou elliptique dans le sens circonférentiel.

13. Dispositif d'écoulement pour le retraitement des gaz d'échappement, dans lequel
le dispositif d'écoulement comprend le guide d'écoulement d'embase selon l'une des revendications précédentes;
le système de retraitement des gaz d'échappement comprend un tube de mélange (220); et
le tube de mélange (220) réside majoritairement dans la chambre de mélange (210) et est logé obliquement sur et s'étend à travers une paroi périphérique de la chambre de mélange (210).

14. Dispositif d'écoulement selon la revendication 13, dans lequel le tube de mélange (220) comprend une entrée de gaz d'échappement périphérique (228) configurée pour accueillir des gaz d'échappement sur un flux de réactif arrivant du doseur (230), et une sortie de tube de mélange (226).

15. Dispositif d'écoulement selon la revendication 13 ou 14, dans lequel la chambre de mélange (210) comprend un ensemble de tourbillonnement autour du tube de mélange (220) qui est configuré pour former un flux rotatif autour de la sortie de tube de mélange (226) et améliorer le flux de gaz d'échappement passant par le tube de mélange (220) en créant une certaine pression autour du tube de mélange (220) en aval de l'entrée de gaz d'échappement périphérique (228).
